Europäisches Patentamt

European Patent Office

Office européen des brevets

(11) Veröffentlichungsnummer: **0 369 310**
**A1**

## (12) EUROPÄISCHE PATENTANMELDUNG

(21) Anmeldenummer: **89120683.1**

(22) Anmeldetag: **08.11.89**

(51) Int. Cl.5: **G01N 21/05**

(30) Priorität: **11.11.88 DE 3838371**

(43) Veröffentlichungstag der Anmeldung:
**23.05.90 Patentblatt 90/21**

(84) Benannte Vertragsstaaten:
**ES**

(71) Anmelder: **AUTOMATIK APPARATE-MASCHINENBAU GMBH Ringheim/Ostring 19 D-8754 Grossostheim 2(DE)**

(72) Erfinder: **Reinhard, Michael, Dr.-Ing. Waldstrasse 9 D-6117 Schaafheim 1(DE)**

(74) Vertreter: **Bardehle, Heinz, Dipl.-Ing. et al Patent- und Rechtsanwälte Bardehle-Pagenberg-Dost-Altenburg-Frohwitter und Partner Galileiplatz 1 Postfach 86 06 20 D-8000 München 86(DE)**

(54) **Messzelle zur Spektralanalyse von strömenden Medien, insbesondere Kunststoffschmelzen.**

(57) Meßzelle zur Spektralanalyse von strömenden Medien, insbesondere Kunststoffschmelzen, bei der das zu analysierende Medium zwischen zwei sich gegenüberstehenden Fenstern (4,5) aus strahlungstransparentem Werkstoff strömt und von einer Strahlung durchsetzt wird, wobei zumindest ein Fenster in einem Rohr (2,3) gehalten wird, das in einer Bohrung des Meßzellenkörpers (1) unter Abdichtung gegenüber diesem durch axiale Bewegung auf das zweite Fenster zu oder von diesem weg bewegbar ist, wodurch die Spaltweite zwischen den Fenstern und damit die Schichtdicke des zu durchstrahlenden Mediums variierbar ist. Das Rohr liegt im Bereich der Abdichtung mit stufenlos zylindrischen Außenfläche direkt an der Wandung der Bohrung an und weist in diesem Bereich gegenüber der Bohrung im ausgebauten Zustand Übermaß auf. Die Wandstärke des Rohres ist mindestens im Bereich der Abdichtung klein gegenüber dem Außendurchmesser des Rohres. In einen Ringspalt zwischen der Innenseite des Rohres und der Mantelfläche des Fensters ist eine Klebstoffschicht (24,25) eingebracht.

Fig. 1

Xerox Copy Centre

## Meßzelle zur Spektralanalyse von strömenden Medien, insbesondere Kunststoffschmelzen

Die Erfindung bezieht sich auf eine Meßzelle zur Spektralanalyse von strömenden Medien, insbesondere Kunststoffschmelzen, bei der das zu analysierende Medium zwischen zwei sich gegenüberstehenden Fenstern aus strahlungstransparentem Werkstoff strömt und von einer Strahlung durchsetzt wird, wobei zumindest ein Fenster in einem Rohr gehalten wird, das in einer Bohrung des Meßzellenkörpers unter Abdichtung gegenüber diesem durch axiale Bewegung auf das zweite Fenster zu oder von diesem weg bewegbar ist, wodurch die Spaltweite zwischen den Fenstern und damit die Schichtdicke des zu durchstrahlenden Mediums variierbar ist.

Der Aufbau einer derartigen Meßzelle geht aus der US-PS 3,177,706 hervor. Bei dieser Meßzelle können zwei Fenster, zwischen deren gegenüberliegenden Fensterflächen das Medium vorbeiströmt, aufeinander zu und voneinander weg bewegt werden. Dies geschieht hier durch Verdrehen der jeweiligen Aufnahme für die Fenster, die als stufenweise abgesetztes Rohr ausgebildet ist und mit einem Bolzengewinde in das Innengewinde in der Bohrung des Meßzellenkörpers eingeschraubt sind. In eine der Stufen im Bereich zwischen dem Gewinde und der Stirnseite des Rohres ist ein Dichtungsring aus elastischem Material eingelegt, der dafür sorgt, dass kein Schmelzmaterial, das zwischen die Innenwandung der Bohrung des Meßzellenkörpers und die Außenfläche des Rohres eingedrungen ist, über den Dichtungsring hinaus in das Gewinde und nach außen gelangen kann.

Da die Meßzellen einen Druck des strömenden Mediums in der Größenordnung von mehreren 100 bar Stand zu halten haben und zwar bei Temperaturen von bis zu einigen 100 Grad Celsius, werden an die Dichtung zwischen dem Rohr und dem Meßzellenkörper extreme Anforderungen gestellt.

Der Erfindung liegt daher die Aufgabe zugrunde, Meßzellenkörper und Rohr so zu gestalten , daß bei konstruktiver Einfachheit hohe Drücke, insbesondere bei hohen Temeraturen, problemlos gedichtet werden. Erfindungsgemäß geschieht dies dadurch, daß der zylindrische Außendurchmesser des Rohres im Bereich der Abdichtung mit stufenlos zylindrischem Durchmesser direkt an der Wandung der Bohrung anliegt und in diesem Bereich gegenüber der Bohrung im ausgebauten Zustand Übermaß aufweist, daß die Wandstärke des Rohres mindestens im Bereich der Abdichtung klein gegenüber dem Außendurchmesser des Rohres ist und daß in einen Ringspalt zwischen der Innenseite des Rohres und der Mantelfläche des Fensters eine Klebstoffschicht eingebracht ist.

Bei dieser Gestaltung erzielt man durch das direkte Anliegen der stufenlos zylindrischen Außenfläche des Rohres an der Wandung der Bohrung eine hohe Dichtflächenpressung, ohne daß dabei die Axialbeweglichkeit des Rohres in der Bohrung des Meßzellenkörpers zu stark gehemmt wird. Dies geht darauf zurück, daß wegen der relativ geringen Wandstärke des Rohres dieses aufgrund der ihm dadurch gegebenen Elastizität sich geringfügig zusammendrücken läßt, so daß die Dichtflächenpressung nicht übermäßig ansteigen kann. Das Rohr ermöglicht dabei auf einfache Weise die Abdichtung gegenüber dem Fenster, das mit seiner Mantelfläche gegenüber der Innenseite des Rohres einen Ringspalt bildet, in dem eine Klebstoffschicht eingebracht ist.

Vorteilhaft gestaltet man den Bereich der Abdichtung so, daß dieser sich bis zu dem dem Medium zugewandten Ende der Bohrung des Meßzellenkörpers erstreckt. Hierdurch wird vermieden, daß an der Stirnseite des Rohres das Medium zwischen die Außenfläche des Rohres und die Wandung der Bohrung eintreten kann, so daß also die Abdichtung an der vordersten Stelle des Rohres erfolgt, wodurch Toträume, in denen sich das Medium ansammeln könnte, ausgeschlossen werden.

Um das Fenster vor zu hohen Radialspannungen zu schützen, verwendet man für die Klebstoffschicht ein im Vergleich zum Fenster- und Rohrwerkstoff elastisches Material. Hierdurch wird erreicht, daß das elastische Zusammendrücken des Rohres von dem elastischen Material der Klebstoffschicht aufgefangen und somit nicht auf das Fenster weitergegeben wird. Dies ist dann besonders bedeutsam, wenn für das Fenster aus Gründen der jeweiligen Spektralanalyse ein Material verwendet werden muß, daß eine hohe Sprödigkeit aufweist.

Die Dichtung zwischen der Innenseite des Rohres und der Mantelfläche des Fensters kann man als Konus gestalten, wozu die Mantelfläche des Fensters konisch mit Zunahme der Durchmessers in Richtung auf das Medium verläuft und das Rohr einen entsprechenden Innenkonus aufweist. Beim Eindrücken des Fensters in den mit einer Klebstoffschicht bestrichenen Innenkonus ergibt sich dann automatisch je nach Stärke des Eindrückens eine düne Klebstoffschicht, die die Abdichtung bewirkt.

Um einerseits zwischen den sich gegenüberstehenden Fenstern besonders schwache Schichtdicken für das Medium einstellen zu können und andererseits mit Sicherheit zu vermeiden, daß beim Aufeinanderzuführen der Fenster diese aufeinander treffen, gestaltet man die Verbindung von Rohr und Fenster so, daß die dem Medium zugewandte Fensterfläche nicht vor die Stirnseite des Rohres vorspringt und im wesentlichen in einer Ebene mit dieser Stirnseite liegt. Bei dieser Gestaltung können sehr dünne Schichten für das Medium zwischen den Fensterflächen eingestellt werden, wobei aber gewährleistet bleibt, daß die Fensterflächen nicht aufeinander treffen können, da bei diesem Aufeinanderzuführen schließlich die Stirnseiten der Rohre aufeinander treffen würden. Dies ist darum von besonderer Bedeutung, weil ein Zusammentreffen der Fensterflächen die Fenster zerstören könnte.

Um auch ein häufigeres Verstellen der Schichtdicke des Mediums zu ermöglichen, gestaltet man zweckmäßig die Außenfläche des Rohres mindestens im Bereich seiner Abdichtung aus verschleißbeständigem Material. Das gleiche gilt auch für die Innwandung der Bohrung. Konstruktiv läßt sich dies dadurch ermöglichen, daß entweder auf die betreffende Fläche bzw. Wandung verschleißbeständiges Material nachträglich aufgebracht wird oder daß die betreffenden Bauteile selbst aus verschleißbeständigem Material gefertigt werden.

Um zu vermeiden, daß sich das Rohr bei seiner axialen Verschiebung in der Bohrung der Meßzelle dreht, kann man das Rohr in einem dem Fenster abgewandten Bereich mit einer Verdrehsicherung versehen. Dies ist dann bedeutsam, wenn das Rohr in bekannter Weise an seiner dem Fenster abgewandten Seite mit einem Gewinde versehen ist, in das ein Muttergewinde eingreift.

Bei Verdrehen der betreffenden, axial zu sichernden Mutter ergibt sich dann eine entsprechende axiale Verschiebung des Rohres und damit ein entsprechende Einstellung der Schichtdicke.

In den Figuren sind Ausführungsbeispiele der Erfindung dargestellt. Es zeigen

Figur 1 eine Meßzelle mit Fenstern, die eine zylindrische Mantelfläche ausweisen, im Schnitt,

Figur 2 eine prinzipiell in gleicher Weise aufgebaute Meßzelle, allerdings mit Fenstern, die eine konische Mantelfläche aufweisen. Infolge der konischen Ausbildung der Fenster sind diese in der Lage besonders hohe Drücke aufzufangen.

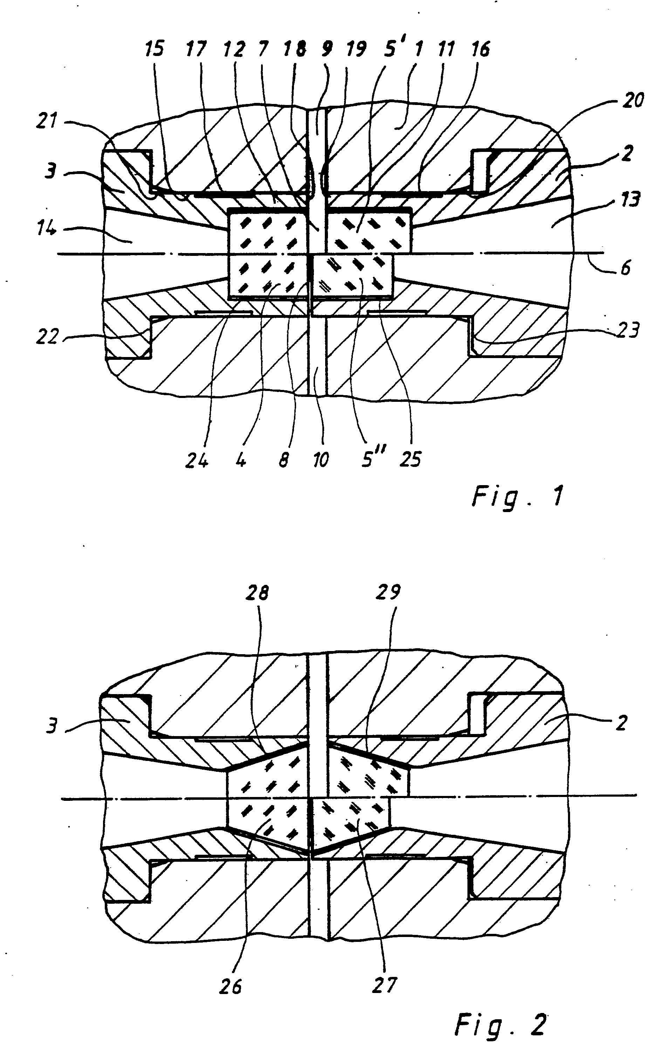

Bei der Figur 1 handelt es sich um einen Schnitt durch die Meßzelle, die aus dem Meßzellenkörper 1 und den beiden Rohren 2 und 3 besteht, die an den einander zugewandten Seiten die Fenster 4 und 5 tragen. Dabei ist das Fenster 5 durch einen gedachten Schnitt längs der Mittellinie 6 in zwei Stellungen gezeichnet. In der mit 5′ gezeichneten Lage des Fensters 5 hält dieses vom Fenster 4 den den Spalt 7 bildenden Abstand ein, während in der unterhalb der Mittellinie gezeichneten Lage 5″ das Fenster 5 einen besonders schmalen Spalt 8 freiläßt. Durch die beiden dargestellten Stellungen des Fensters 5 (5′ bzw. 5″) wird die Variationsbreite des Spaltes 7 bzw. 8 zwischen den Fenstern 4 und 5 verdeutlicht.

Die Zuleitung des strömenden Mediums zu dem Spalt 7 bzw. 8 erfolgt über die Durchbrüche 9 und 10 in dem Meßzellenkörper 1, die in den Spalt 7 bzw. 8 einmünden.

Die Rohre 2 und 3 bilden im Bereich der Fenster 4 und 5 relativ dünnwandige Hohlzylinder 11 und 12, deren Stärke so gering ist, daß die Holzylinder 11 und 12 eine gewisse Elastizität aufweisen. Aufgrund eines im ausgebauten Zustand bestehenden Übermaßes der Rohre 2 und 3 gegenüber der die Röhre 2 und 3 aufnehmenden Bohrung 15 können also die beiden Hohlzylinder 11 und 12 geringfügig radial nach innen nachgeben, wodurch sich eine gewünschte hohe Dichtflächenpressung zwischen Außendurchmesser der Rohre 2 und 3 und dem Durchmesser der Bohrung 15 ergibt. Aufgrund der Elastizität der beiden Hohlzylinder 11 und 12 behalten diese ihre axiale Beweglichkeit in der Bohrung 15, so daß sich sowohl das Rohr 2 als auch das Rohr 3 axial verschieben läßt, ohne daß dabei die Abdichtung zwischen Rohr 2 bzw. 3 und dem Meßzellenkörper 1 beeinträchtigt wird.

Um die bei der Axialbewegung der Rohre 2 und 3 sich ergebende Reibung zwischen den Rohren 2 und 3 und der Wandung der Bohrung 15 in Grenzen zu halten, ist in die Außenfläche der Rohre 2 und 3 jeweils eine ringförmige Ausnehmung 16 und 17 eingelassen, wodurch der Bereich der Abdichtung zwischen Rohr 2 bzw. 3 und Bohrung 15 auf die Länge zwischen der Ausnehmung 16 bzw. 17 und die betreffende Stirnseite 18 bzw. 19 des Rohres 2 bzw. 3 beschränkt ist, sofern die Stirnseite nicht über den Rand des Durchbruches 9 bzw. 10 hinaus ragt, wie dies bei dem Fenster 5 in dessen unterhalb der Mittellinie 6 dargestellten Stellung 5″ der Fall ist. In einer Stellung des Fensters 4 bzw. 5, in der dieses in den Bereich des Durchbruchs 9 bzw. 10 hineinragt, wird also der Bereich der Abdichtung um die Länge dieses Hineinragens verkürzt. Die beiden Ausnehmungen 16 und 17 können mit einem Schmiermittel gefüllt sein, um insbesondere ein Fressen der aneinanderliegenden und gegeneinander bewegten Teile zu vermeiden.

Der Meßzellenkörper 1 ist an den Einführungsstellen für die Rohre 2 und 3 mit den Einführschrägen 20 und 21 versehen. Der Bereich der Rohre 2 und 3 zwischen den Ausnehmungen 16 und 17 und den Schultern 22 und 23 weist kein Übermaß auf, er dient hier lediglich der Führung.

Die beiden Fenster 4 und 5 sind in die Rohre 2 und 3 jeweils mittels der Klebstoffschicht 24 und 25 befestigt. Für die Klebstoffschicht ist hier ein elastisches Material verwendet, das gewährleistet, daß bei einem Zusammendrücken der Hohlzylinder 11 und 12 kein zu hoher Druck auf die Fenster 4 und 5 weitergegeben wird.

Die Stirnseiten 18 und 19 der Rohre 2 und 3 liegen hier in einer Ebene mit der dem Spalt 7 bzw. 8 zugewandten Oberfläche des Fensters 4 bzw. 5. Hierdurch wird vermieden, daß sich im Bereich der Stirnseiten 18 und 19 Toträume bilden, in denen sich durch den Spalt 7 bzw. 8 strömendes Medium festsetzen kann. Wenn dafür gesorgt werden soll, daß beim Zusammenführen der Fenster 4 und 5 deren aneinander zugewandten Oberflächen sich nicht berühren sollen, dann lässt man die Stirnseiten 18 und 19 gegenüber den betreffenden Oberflächen der Fenster 4 und 5 leicht vorspringen.

Die Axialbewegung der beiden Rohre 2 und 3 mit den Fenstern 4 und 5 kann in bekannter Weise mittels eines Gewindes erfolgen, daß auf die den Fenstern 4 und 5 abgewandten Seite der Rohre 2 und 3 geschnitten ist und in das ein Muttergewinde einer axial gesicherten drehbaren Mutter greift. Damit nun bei der Verdreh bewegung dieser hier nicht dargestellten Mutter das Rohr 2 bzw, 3 nicht mitgedreht wird, ist jedem Rohr 2 bzw. 3 eine Verdrehsicherung gegeben, die hier durch einen viereckigen Querschnitt des Rohres 2 bzw. 3 in seinem Bereich zwischen seinem äußeren Ende und der Schulter 22 bzw. 23 gebildet wird.

In der Figur 2 ist eine in prinzipiell gleicher Weise aufgebaute Meßzelle dargestellt, bei der lediglich die Fenster 26 und 27 konisch ausgebildet sind und jeweils in einem entsprechenden Konus des Rohres 2 bzw. 3 sitzen. Die Befestigung der Fenster 26 und 27 gegenüber dem betreffenden Konus in den Rohren 2 und 3 erfolgt dabei mittels der Klebstoffschicht 28 bzw. 29. Im übrigen ist die Meßzelle gemäß Figur 2 aus den gleichen Bauteilen wie die Meßzelle gemäß Figur 1 aufgebaut, so daß jeweils gleiche Bezugszeichen verwendet werden.

Es sei noch darauf hingewiesen, daß es ausreicht, wenn nur einem Rohr mit Fenster die axial Beweglichkeit gegeben wird, sofern hierdurch der gleichmäßige Durchfluß des Mediums durch den Spalt 7 bzw. 8 nicht gestört wird.

**Ansprüche**

1. Meßzelle zur Spektralanalyse von strömenden Medien, insbesondere Kunststoffschmelzen, bei der das zu analysierende Medium zwischen zwei sich gegenüberstehenden Fenstern (4,5) aus strahlungstransparentem Werkstoff strömt und von einer Strahlung durchsetzt wird, wobei zumindest ein Fenster (4,5) in einem Rohr (2,3) gehalten wird, das in einer Bohrung (15) des Meßzellenkörpers (1) unter Abdichtung gegenüber diesem durch axiale Bewegung auf das zweite Fenster (5,4) zu oder von diesem weg bewegbar ist, wodurch die Spaltweite (7,8) zwischen den Fenstern (4,5) und damit die Schichtdicke des zu durchstrahlenden Mediums variierbar ist, **dadurch gekennzeichnet,** daß das Rohr (2,3) im Bereich der Abdichtung mit stufenlos zylindrischen Außenfläche direkt an der Wandung der Bohrung anliegt (15) und in diesem Bereich gegenüber der Bohrung (15) im ausgebauten Zustand Übermaß aufweist, daß die Wandstärke des Rohres (2,3) mindestens im Bereich der Abdichtung klein gegenüber dem Außendurchmesser des Rohres (2,3) ist und daß in einen Ringspalt zwischen der Innenseite des Rohres (2,3) und der Mantelfläche des Fensters (4,5) eine Klebstoffschicht (24,25) eingebracht ist.

2. Meßzelle nach Anspruch 1, **dadurch gekennzeichnet,** daß sich der Bereich der Abdichtung bis zu dem dem Medium zugewandten Ende der Bohrung (15) des Meßzellenkörpers (1) erstreckt.

3. Meßzellen nach Anspruch 1 oder 2, **dadurch gekennzeichnet,** daß die Klebstoffschicht (24,25; 28,29) aus einem im Vergleich zum Fenster- und Rohrwerkstoff elastischen Material besteht.

4. Meßzelle nach einem der vorhergehenden Ansprüche **dadurch gekennzeichnet,** daß die Mantelfläche des Fensters (4,5) konisch mit Zunahme des Durchmessers in Richtung auf das Medium gestaltet ist und das Rohr (2,3) einen entsprechenden Innenkonus aufweist.

5. Meßzelle nach einem der Ansprüche 1 - 4, **dadurch gekennzeichent,** daß die dem Medium zugewandte Fensterfläche nicht vor die Stirnseite (18,19) des Rohres (2,3) vorspringt und im wesentlichen in einer Ebene mit dieser Stirnseite (18,19) liegt.

6. Meßzelle nach einem der vorgehenden Ansprüche, **dadurch gekennzeichnt,** daß die Außenfläche des Rohres (2,3) mindestens im Bereich seiner Abdichtung aus verschleißbeständigem Material besteht.

7. Meßzelle nach einem der vorgehenden Ansprüche, **dadurch gekennzeichnet,** daß die Wandung der Bohrung (15) mindestens im Bereich der Abdichtung aus verschleißbeständigem Material besteht.

8. Meßzelle nach einem der vorgehenden Ansprüche, **dadurch gekennzeichnet,** daß das Rohr (2,3) in einem dem Fenster (4,5) abgewandten Bereich mit einer Verdrehsicherung vesehen ist.

Fig. 1

Fig. 2

Europäisches Patentamt

**EUROPÄISCHER RECHERCHENBERICHT**

Nummer der Anmeldung

EP 89 12 0683

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | JOURNAL OF THE OPTICAL SOCIETY OF AMERICA, Band 34, Nr. 3, März 1944, Seiten 130-134; D.C. SMITH et al.: "Infra-Red absorption cells and measurement of cell thickness" * Figure 3; Seite 131, linke Spalte, Zeile 21 - rechte Spalte, Zeile 23 * | 1,6-8 | G 01 N 21/05 |
| A | US-A-3 740 156 (HEIGL) * Spalte 2, Zeilen 54-62 * | 1 | |
| A | US-A-3 810 695 (SHEA) * Figuren 2,3; Spalte 2, Zeilen 29-32 * | 1 | |
| A | THE REVIEW OF SCIENTIFIC INSTRUMENTS, Band 41, Nr. 12, Dezember 1970, Seiten 1880-1881; H.D. STROMBERG et al.: "A window configuration for high pressure optical cells" * Figur 1; Seite 1880, linke Spalte, Zeilen 39-47 * | 1,3-5 | |
| A | SOVIET INVENTIONS ILLUSTRATED, Derwent Publications Ltd., London, GB, Woche 24, Februar 1982, Zusammenfassung Nr. S03,A4138,E/02; & SU-A-817 547 (AS BELO NUCL POWER) | 5 | **RECHERCHIERTE SACHGEBIETE (Int. Cl.5)** G 01 N |

Der vorliegende Recherchenbericht wurde für alle Patentansprüche erstellt

| Recherchenort | Abschlußdatum der Recherche | Prüfer |
|---|---|---|
| DEN HAAG | 30-01-1990 | KLEIKAMP B.M.H.H. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes Dokument